# EUROPEAN PATENT APPLICATION

(11) **EP 1 482 159 A2**
(43) Date of publication of application: **01.12.2004**
(21) Application number: 04252682.2
(22) Date of filing: 07.05.2004
(51) Int. Cl.: F02K 1/10

(54) **Engine nozzle and engine with such a nozzle**

(30) Priority: 31.05.2003 GB 0312505
(71) Applicant: ROLLS-ROYCE PLC, London, SW1E 6AT (GB)
(72) Inventor: Webster, John Richard, Derby DE23 6AF (GB); Jones, Alan Richard, Derby DE22 1BN (GB)
(74) Representative: Gunn, Michael Alan

(57) **Abstract**

An engine nozzle (21, 31, 41, 51, 61) is described in which the nozzle is deformable from a first state, typically a round shape, to a second state which may approach a polygon or have a fluted edge. The first and the second state defining different nozzle cross-sections whereby the nozzle can be adjusted between the first and second state for a nozzle cross-section optimised for engine efficiency. Deformation in the nozzle may be achieved through use of shape memory materials, pressure chambers, piezo-electric element (44) deformation or other technique.

## Description

The present invention relates to engine nozzles and more particularly to engine nozzles used with turbine engines.

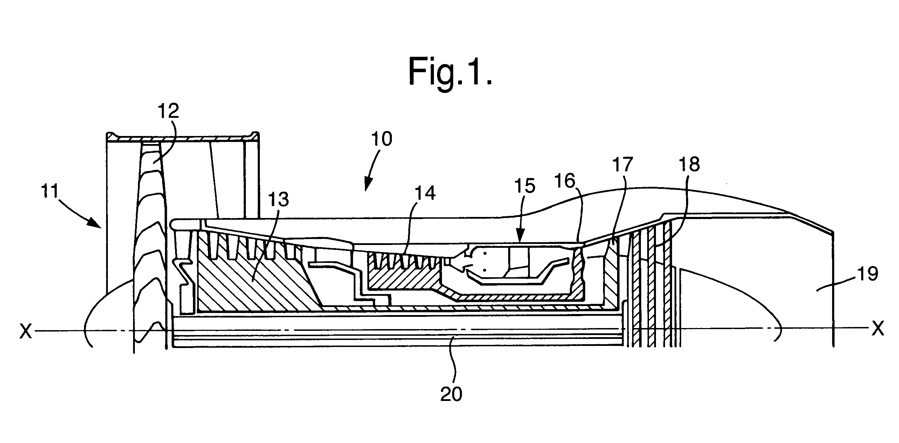

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts.

The present invention particularly relates to the exhaust nozzle 19 and the bypass nozzle 19a. It is known that nozzle area has significant effects upon engine performance including efficiency, fan and OGV flutter and noise. Of particular relevance is the cold nozzle area of the exhaust nozzle 19, 19a which may be determined for optimisation with engine 10 in a cruise or steady operating state in comparison with that required for take-off. It is known that relatively small changes in nozzle area will have a beneficial effect but previous systems have generally required incorporation of expensive actuator elements to vary exhaust nozzle 19, 19a area through displacement of petals which form the nozzle. Such an approach has been used with military aircraft. Another approach has been to increase the axial length of the nozzle in order to optimise engine efficiency at differing operating conditions (RU 2063534).

In accordance with the present invention there is provided an engine nozzle for a turbine engine, the nozzle being formed to allow variation in its cross-sectional area dependent upon operational status, the nozzle characterised in that the nozzle is deformable from a first state to a second state of differing cross-sectional area, the nozzle being associated with deformation means to progressively shift deformation of the nozzle to alter presented nozzle cross-sectional area.

Preferably, the first state comprises a round circumference and the second state approximates a polygon or pursed flute.

Typically, the deformation means is a shape memory material. Normally the shape memory material is secured to the nozzle or is an integral part of that nozzle.

Alternatively, the deformation means comprises piezo-electric elements secured to the nozzle. Further alternatively, the deformation means comprises presentation of differential pressure upon different portions of the nozzle. Additionally, the deformation means may comprise provision of differential co-efficients of expansion or contraction for the nozzle in different portions of that nozzle or discrete actuation.

Normally, the nozzle is biased to one or other of the first or second states. Typically, the nozzle is biased to the first state.

Normally, there will be a greater than 4% change in the cross-sectional area as a result of deformation from the first state to the second state.

Generally the second state will provide a cross-section wholly within the cross-section of the first state.

Also in accordance with the present invention there is provided an engine incorporating an engine nozzle as described above.

Embodiments of the present invention will now be described by way of example only with reference to the accompanying drawings, in which:
Fig. 2 is a schematic illustration of a first embodiment;
Fig. 3 is a schematic illustration of a second embodiment;
Fig. 4 is a schematic illustration of a third embodiment;
Fig. 5 is a part schematic illustration of a further means for nozzle deformation; and
Fig. 6 is a schematic illustration of a fourth embodiment of the present invention.

As indicated above it is known that exhaust nozzle cross-section is influential with regard to turbine engine efficiency. Unfortunately, the optimum nozzle cross-section varies dependent upon operational condition for the engine. Thus, the optimum cross-section for take-off with an engine used as propulsion for an aircraft will be different from the nozzle cross-section which achieves the most efficient engine performance during normal operational or cruising conditions. It is provision of variable nozzle geometry in terms of cross-section without complicated actuation mechanisms involving displacement of nozzle petals using rams etc. which is the principal problem.

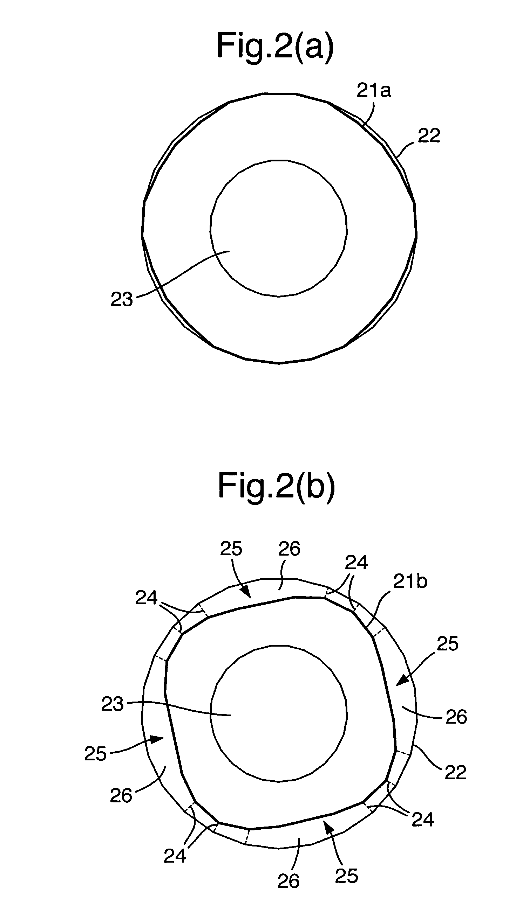

In accordance with the present invention a nozzle is provided which has an inherent deformation range between two configurational states which is utilised in order to allow variation in the nozzle cross-section for best performance with current operational conditions. The nozzle is formed from a material readily deformed in order to provide the variation in nozzle cross-section. Figs. 2 to 6 illustrate various embodiments of the present invention in order to illustrate in particular approaches to deformation. However, it will be appreciated that generally there is a first state which will normally be of a substantially round circumference and a second state which has a reduced cross-section in comparison with the first state achieved by adopting a different shape under deformation. Nevertheless, it will be appreciated that also within the scope of the present invention is expansion of the nozzle beyond the base first state of a round circumference in order to increase nozzle cross-section. Typically, the second state will approach a polygon deformed from the first state. Alternatively, the second state may take the form of a pursed flute cross-section with castellated flutes indenting from the first state.

Fig. 2 illustrates schematic front views of a nozzle 21 in accordance with the present invention. The nozzle 21a depicted in Fig. 2a defines a first state which approximates a round circumference 22. Thus, the nozzle 21a in the first state has a first nozzle cross-sectional area of known proportions. The circumference 22 also schematically defines a general housing within which the nozzle 21a is located. An engine 23 presents an airflow to the nozzle 21a and as described previously the nozzle cross-sectional area defined by the nozzle 21a will be specified for one particular operational state of the engine 23.

As described above the engine 23 will have an improved efficiency and performance if it is associated with a nozzle optimised for its current operational state. Thus, as depicted in Fig. 2b the nozzle 21a shown in Fig. 2a has been deformed to provide a geometry shown by nozzle 21b in Fig. 2b. In accordance with the embodiment described in Fig. 2 this deformation is provided by creating pressure chambers 26 partitioned by broken lines 24 within a housing defined by the perimeter of housing circumference 22. These pressure chambers 26 are differentially pressurised in order to deform the nozzle 21b inwardly in the direction of arrowheads 25 in order to create the nozzle 21b with a different shape and nozzle cross-section to that depicted in Fig. 2a with regard to nozzle 21a. Such pressurisation of the chambers 26 will be achieved through application of compressed air or other fluid within each chamber 26 in order to deform the nozzle 1. This compressed air may be taken from the engine 23 compressor air flow.

In the above circumstances a nozzle 21 is provided which can have a variable geometry between the first state depicted in Fig. 2a and a second state depicted in Fig. 2b such that the nozzle cross-section is varied as required operational performance of the engine 23. Such variation in the nozzle 21 is achieved simply through radial deformation, expansion or contraction, about the centre line of the nozzle 21.

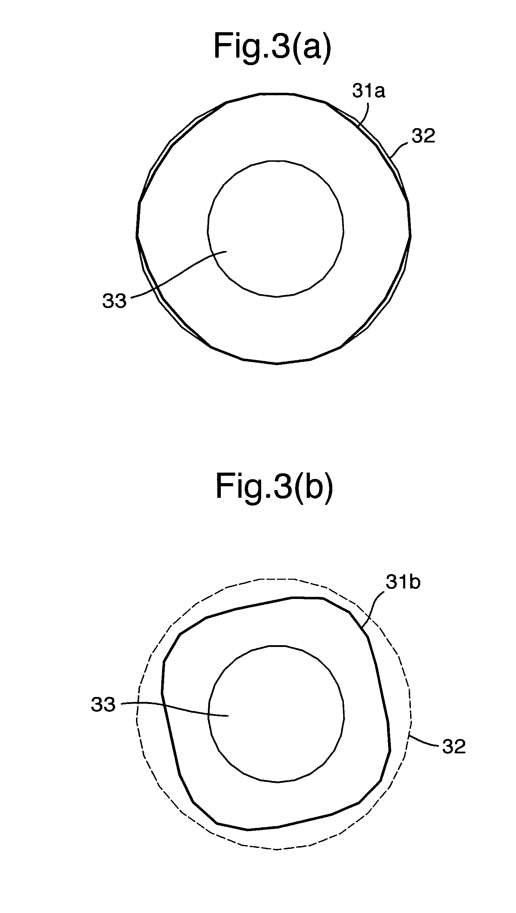

Fig. 3 illustrates a front view of a nozzle 31 in accordance with a second embodiment of the present invention. Again the nozzle 31 is deformable between a first state substantially defined within a round circumference 32 perimeter and a second state whereat the nozzle 31b is deformed within that perimeter 32. In such circumstances, the nozzle 31a in the first state and the nozzle 31b in the second state define respectively different nozzle cross-sectional areas. An engine 33 as previously defined has a propulsive flow which is presented to the nozzle 31 with a nozzle cross-section optimised for that engine's operational state. Typically the nozzle 31 cross-section will be at a stage between the first state shown in Fig, 3a and the second state shown in Fig. 3b.

The nozzle 31 in accordance with the second embodiment shown in Fig. 3 incorporates shape memory material which responds to temperature and/or pressure in order to cause the deformation between the first state and the second state depicted in Fig. 3. The shape memory material may be an integral part of the nozzle 31 but normally will be attached at appropriate locations such that its contraction or expansion under temperature and/or pressure drags deformation of the nozzle 31 between the first state and the second state and so in turn alters nozzle cross-section as required by engine 33 performance. The shape memory material may, for example, be heated by air circulated from elsewhere in the engine, electrical resistance heating or by ambient conditions.

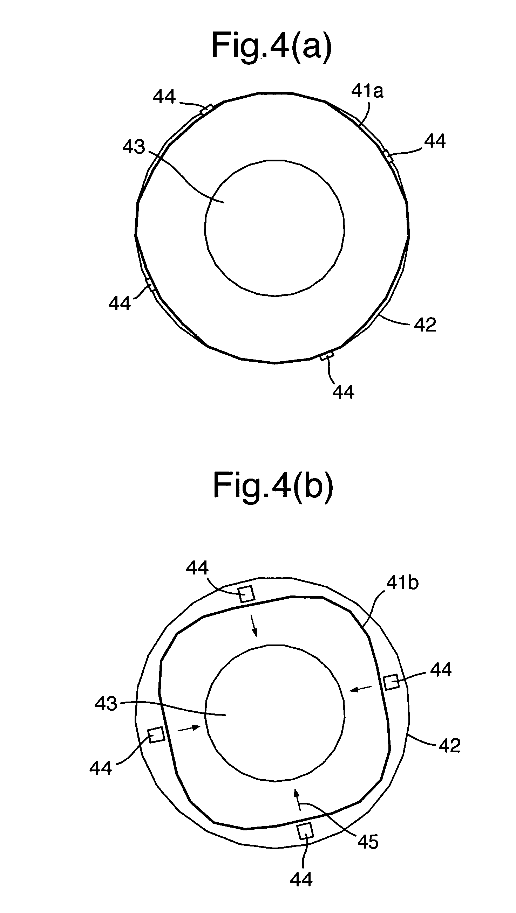

Fig. 4 illustrates a nozzle 41 in accordance with a third embodiment of the present invention. Again the nozzle 41 is deformable between a first state depicted in Fig. 4a and a second state depicted in Fig. 4b. This deformation is created by piezo-electric elements 44 which act when subjected to a direct electrical current to expand and therefore deform the nozzle 21 inwards in the direction of arrowheads 45. Alternatively, the elements 44 may be held in an expanded state by an electrical current and so deformation is achieved by fully or partially removing that electrical current. As with previous embodiments described in Figs. 2 and 3 the nozzle 41 in the first state depicted in Fig. 4a substantially adopts a round circumference of a first nozzle cross-section whilst in the second state depicted in Fig. 4b that nozzle 41b has a different nozzle cross-section. In such circumstances an engine 43 which provides a propulsion flow may have improved efficiency and performance by optimising the nozzle cross-section for particular operational status for that engine 43.

The piezo-electric elements 44 as indicated above expand when subjected to a direct electrical current and contract when that current is removed. The elements 44 are located between a housing 42 and the nozzle 41 in order to create the desired deformation. It will be understood that only four piezo-electric elements 44 are depicted for clarity in the schematic representation of Fig. 4 but in reality a far greater number of piezo-electric elements will be utilised in concert to achieve the desired radial expansion and contraction deformations in accordance with the present invention.

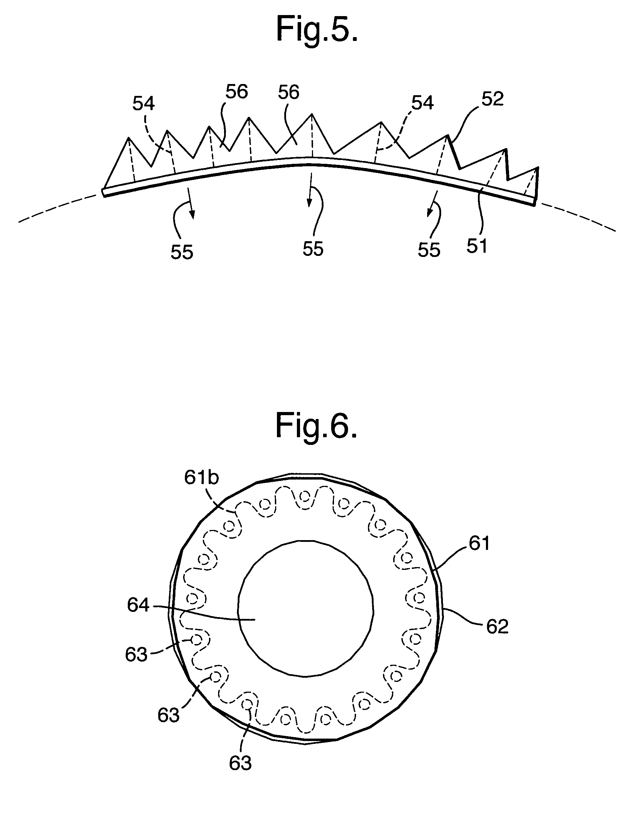

Fig. 5 illustrates a schematic front portion of a nozzle 51 subject to deformation in accordance with a third embodiment of the present invention. The nozzle 51 is associated with a bellows perimeter element 52 in order to define pressure chambers 56 between partitions 54. In such circumstances in order to deform the nozzle 51 and therefore create differential nozzle cross-sections the pressure chambers 56 are pressurised to force the nozzle 51 inwardly in the direction of arrowheads 55. In such circumstances the embodiment depicted in Fig. 5 is similar to the first embodiment depicted and described with reference to Fig. 2. However, by providing the bellows element 52 it will be appreciated that specific pressure chambers within a housing (2 in Fig. 1) are not required with all the inherent problems with sealing and greater pressure chamber volume to be pressurised in order to create deformation are eliminated.

It will be appreciated from above that a number of techniques and processes are utilised in accordance with the present invention to create deformation in a nozzle and therefore variation in nozzle cross-section. In addition to those described above it would be possible also to use expansion members such as waxs associated with the nozzle in order to create the necessary deformation in that nozzle for variation in the cross-sectional area. Furthermore, a nozzle could be made from materials having markedly different coefficients of thermal expansion and/or contraction to enable the necessary deformations in shape.

It will be appreciated that the present invention utilises a unitary nozzle which is specifically deformed between a first state and a second state in order to alter nozzle cross-section. In such circumstances it will be understood that the nozzle will be subjected to wrinkling and stressing in order to accommodate the variations in cross-section. The nozzle will therefore be made from a relatively thin or flexible material to allow for appropriate deformation using the deformation techniques and methods as described above. It will also be understood that rather than transform the substantially round periphery of the nozzle toward a polygon geometry that the nozzle may be fluted or concertinaed in the manner of a purse string closure as a result of the deformation. Such a situation is illustrated in Fig. 6. Thus, a nozzle 61 is shown in solid line in a first state substantially consistent with a circumferential peripheral profile 62 whilst as a result of deformation that profile assumes a fluted profile as it is deformed and contracted in a purse string fashion to a geometry depicted by broken line 61b. Such purse string deformation into the fluted configuration of nozzle 61b may be achieved through circumferential bands (not shown) about the nozzle 61 or longitudinal elements 63 deforming the nozzle 61b inwards upon localised sections of that nozzle 61b. It will also be understood that localised pressure chambers acting on specific portions of the nozzle 61 would also create the fluted configuration of nozzle 61b or localised sections of shape memory material altered as a result of temperature and/or pressure would create the fluted configuration in substitution for the elements 63. In such circumstances an engine 64 will be presented with differing nozzle cross-sections dependent upon the operational state of that engine 64.

As indicated above relatively small alterations in nozzle cross-section have been found to provide disproportionately greater improvements in engine performance and efficiency. Typically, in accordance with the present invention the deformation range between the first state for the nozzle and the second state for the nozzle will create at least a 4% alteration in the nozzle cross-section. However, as indicated above the present invention utilises deformation of a unitary nozzle such that greater deformation will require greater constriction of the nozzle through deformation using the techniques and methods described above. Such greater deformation will in turn create greater stresses upon the material from which the nozzle is formed resulting in higher stress levels and probable earlier crack failure in use.

As indicated above generally the second state after deformation will be within the first state peripheral profile. Thus, the variation in nozzle cross-section will normally be from a circumferential perimeter cross-section and be a contraction. In such circumstances, it will be appreciated that the circumferential perimeter could be defined by a base nozzle of substantial structural strength to withstand high temperatures and flow rates typical during take-off propulsion whilst in accordance with the present invention an effective nozzle liner is deformed by the respective deformation methods and techniques described in order to define an operational cross-section less than that base nozzle cross-section. In such circumstances more flexible and even flaccid materials may be used which can accommodate greater deformations in accordance with the present invention in order to define larger variations in the nozzle cross-sectional area. The liner would be supported by the base nozzle when approaching the first state typically with maximum nozzle cross-section in order to provide further structural strength and resistance to temperatures and higher propulsion flows in that first state.

The present invention provides a simple, low cost nozzle area alteration system by producing a circumferential variation in the bend radius of the nozzle. However, it will be understood that it is provision of respectively different nozzle cross-section area shapes in a first state and a second state which allows adjustment of the presented nozzle cross-sectional area for particular engine operating conditions. The states associated with the nozzle will typically comprise the extremities of a nozzle cross-sectional range which can be adjusted using the deformation mechanisms described above specifically for particular engine performance. Normally, the nozzle will be configured at an intermediate position between the two extremes defined by the states of the nozzle in terms of shape cross-sections. As indicated typically the greatest cross-section will be defined by a round circumference shape whilst the second state will be defined as a substantial polygon such as a round cornered square or a sinusoidal variation in radial portion around the circumference.

It will be appreciated that the particular nozzle cross-section may be determined through a control loop incorporating sensors to determine engine status and operational condition and a controller device to receive signals indicative of such engine status and operational condition in order to appropriately determine required nozzle cross-section and/or cross-sectional area for performance. Alternatively, the nozzle will be formed from materials and airflows within the engine appropriately directed in order to automatically adjust nozzle cross-section with temperature and airflow pressure in order to achieve engine efficiency. It will be understood that the theoretical best nozzle cross-sections required for engine efficiency will be calculable or may be empirically determined such that by choice of appropriate nozzle materials in terms of shape memory components and/or pressure chambers or other deformation mechanisms also variation in the nozzle cross-section can be determined through engine cycling from cold to normal operational temperatures and airflow pressures.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An engine nozzle (21, 31, 41, 51, 61) for a turbine engine (23, 33), the nozzle being formed to allow variation in its cross-sectional area dependent upon operational status, the nozzle **characterised in that** the nozzle is deformable from a first state (21a, 31a, 41a) to a second state (21b, 31b, 41b, 61b) of differing cross-sectional area, the nozzle being associated with deformation means to progressively shift deformation of the nozzle to alter presented nozzle cross-sectional area.

2. A nozzle as claimed in claim 1, wherein the first state comprises a round circumference and the second state approximates a polygon, pursed flute, or sinusoidal variation in radius around the circumference.

3. A nozzle as claimed in claim 1 or claim 2, wherein the deformation means is a shape memory material.

4. A nozzle as claimed in claim 3, wherein the shape memory material is secured to the nozzle or is an integral part of that nozzle.

5. A nozzle as claimed in claim 1 or claim 2, wherein the deformation means comprises piezo-electric elements (44) secured to the nozzle.

6. A nozzle as claimed in claim 1 or claim 2, wherein the deformation means comprises presentation of differential pressure upon different portions (26) of the nozzle.

7. A nozzle as claimed in claim 1 or claim 2, wherein the deformation means may comprise provision of differential co-efficients of expansion or contraction for the nozzle in different portions of that nozzle.

8. A nozzle as claimed in any preceding claim, wherein the nozzle is biased to one or other of the first or second states.

9. A nozzle as claimed in claim 8, wherein the nozzle is biased to the first state.

10. A nozzle as claimed in any preceding claim, wherein there will be a greater than 4% change in the cross-sectional area as a result of deformation from the first state to the second state.

11. A nozzle as claimed in any preceding claim, wherein the second state will provide a cross-section wholly within the cross-section of the first state.

12. A nozzle as claimed in claim 6 and any claim dependent thereon, wherein the different portions of the nozzle are constituted by pressure chambers (26).

13. A nozzle as claimed in claim 12, wherein the pressure chambers are formed by partitions (24) within a housing (22) about the nozzle (21).

14. A nozzle as claimed in claim 12, wherein the different portions of the nozzle (51) are formed by a bellows element (52) secured about the nozzle (51).

15. An engine incorporating an engine nozzle as claimed in any preceding claim.
